# EUROPEAN PATENT APPLICATION

(11) **EP 4 628 727 A1**
(43) Date of publication of application: **08.10.2025**
(21) Application number: 24168037.0
(22) Date of filing: 02.04.2024
(51) Int. Cl.: F03D 17/00

(54) **WIND TURBINE BLADES, METHODS AND INSPECTION DEVICES**

(71) Applicant: LM Wind Power A/S, 6000 Kolding (DK)
(72) Inventor: MILLER, Garry, 6000 Kolding (DK); Casper, KILDEGAARD, 6000 Kolding (DK); WAGHMARE, Abhay Laxmanrao, 562111 Bangalore (IN)
(74) Representative: Bardehle Pagenberg S.L.

(57) **Abstract**

The present disclosure relates to wind turbine blades (10) comprising an inspection device (30) for inspecting an inside of the wind turbine blade (10), to methods (100) for mounting an inspection device (30) in a wind turbine blade shell (24, 26) and to methods (200) for inspecting an inside of a wind turbine blade (10). The present disclosure further relates to inspection devices (30). A wind turbine blade (10) comprises a shell (24, 26) having a hole and comprises an inspection device (30). The inspection device (30) comprises a housing (31) arranged at least partially in the hole. The inspection device (30) further comprises an image acquisition system (36) arranged at a longitudinal end portion (43) of the housing (31) having a field of view of at least a portion of an inside of the wind turbine blade (10).

## Description

### FIELD

The present disclosure relates to wind turbine blades comprising at least an inspection device and to wind turbines comprising one or more of such wind turbine blades. The present disclosure further relates to devices for inspecting, and in particular, imaging, an inside of wind turbine blades, to methods for installing and securing the inspection devices to a shell of a wind turbine blade, and to methods for inspecting an inside of a wind turbine blade.

### BACKGROUND

Modern wind turbines are commonly used to supply electricity into the electrical grid. Wind turbines of this kind generally comprise a tower and a rotor arranged on the tower. The rotor, which typically comprises a hub and a plurality of blades, is set into rotation under the influence of the wind on the blades. Said rotation generates a torque that is normally transmitted through a rotor shaft to a generator, either directly ("directly driven" or "gearless") or through the use of a gearbox. This way, the generator produces electricity which can be supplied to the electrical grid.

The wind turbine hub may be rotatably coupled to a front of the nacelle. The wind turbine hub may be connected to a rotor shaft, and the rotor shaft may then be rotatably mounted in the nacelle using one or more rotor shaft bearings arranged in a frame inside the nacelle. The nacelle is a housing arranged on top of a wind turbine tower that may contain and protect the gearbox (if present) and the generator (if not placed outside the nacelle) and, depending on the wind turbine, further components such as a power converter, and auxiliary systems.

The wind turbine blades may deteriorate or get damaged during the lifetime of a wind turbine. For example, wind forces and vibrations may weaken, even break, a wind turbine blade. It can happen that in specific wind farms, wind has been more turbulent than expected, or more storms have occurred and thus that generally loads have been higher than expected.

Excessively high or excessively low temperatures and humidity may also deteriorate a wind turbine blade. If protection against lightning strikes fails or is insufficient, the electrical current can damage the blade. Also, undesired defects arising during the process of blade manufacturing may cause vulnerabilities in the wind turbine blade.

Performing inspections may help to identify deteriorated portions of the blades and to fix the damage before the problem increases. Due to inspection and maintenance routines, the blades may keep their structural integrity and aerodynamic performance for longer periods of time.

As wind turbine blades are generally very long, taper towards the tip and include structural supports such as beams and others, inspecting an inside of a wind turbine blade may be difficult and time consuming for operators. Also, varying weather conditions and wind turbines installed in places which are difficult to access may pose a challenge for safely reaching and accessing an inside of the wind turbine blades.

In order to inspect an inside of a blade, a camera may be carried and manipulated by an operator inside the blade, or a camera may be attached to an inner surface of the blade then images may be taken e.g. at predetermined intervals or at specific times. Having a camera attached to an inner surface of a wind turbine blade for inspecting the wind turbine blade may be safer than having one or more operators inside the blade, and inspection may be performed faster as operators do not need to go to a wind turbine blade site each time that an inside of the blade are to be inspected.

However, accessing an inside of a wind turbine blade for attaching one or more cameras to an inner surface of a wind turbine blade may still be challenging and time consuming due to the internal dimensions of the blade and the structural supports inside it, particularly if the wind turbine is already in the field. For the same reasons, changing the installed cameras when necessary can also be difficult and take a long time.

The present disclosure aims at facilitating installation and maintenance of an image acquisition system for inspecting an inside of a wind turbine blade.

### SUMMARY

In an aspect of the present disclosure, a wind turbine blade is provided. The wind turbine blade comprises a blade shell and an inspection device. The blade shell comprises a hole and an internal wall surrounding the holes. The inspection device comprises a housing arranged at least partially in the hole of the blade shell. The housing is secured to the blade shell. The inspection device further comprises an image acquisition system arranged at a longitudinal end portion of the housing having a field of view of at least a portion of an inside of the wind turbine blade.

According to this aspect, a wind turbine blade including an inspection device comprising an image acquisition system is provided. The inspection device is inserted in a hole of the wind turbine blade shell and secured to the blade shell. The inspection device may thus image a desired region of an inside of the wind turbine blade.

In a further aspect of the disclosure, a wind turbine is provided. The wind turbine comprises a wind turbine blade according to the previous aspect. One, two or more, including all, the blades of the wind turbine may be according to the previous aspect.

In a further aspect of the disclosure, a method for mounting an inspection device comprising a housing and an image acquisition system arranged at a longitudinal end portion of the housing in a wind turbine blade comprising a shell is provided. The method comprises providing a through hole in the shell of the wind turbine blade. The method further comprises inserting the inspection device in the through hole such that a field of view of the image acquisition system comprises at least a portion of an inside of the wind turbine blade. The method further comprises securing the inspection device to the blade shell.

The inspection device may therefore be easily and quickly installed in the shell of the wind turbine. Less time may be required for installing the inspection device, for example in comparison with a device which is to be carried inside the wind turbine blade and attached to an inside surface of the blade.

In a further aspect of the disclosure, a method for inspecting an inside of a wind turbine blade is provided. The method comprises inserting an inspection device within a through hole of a shell of the wind turbine blade. The inspection device comprises a housing and an image acquisition system arranged at a longitudinal end portion of the housing. The method further comprises securing the inspection device to the wind turbine blade such that the image acquisition system can image at least a portion of an inside of the wind turbine blade. The method further comprises taking one or more images with the image acquisition system, and transmitting the one or more images.

In a further aspect of the disclosure, an inspection device is provided. The inspection device comprises a tubular housing. The housing may extend in a longitudinal direction and in a radial direction perpendicular to the longitudinal direction. The housing is configured to be inserted, e.g. sized and shaped, in a through hole extending between an outer surface and an inner surface of a blade shell of a wind turbine blade. The housing is configured to be attached to the blade shell. The inspection device further comprises an image acquisition system arranged at a longitudinal end portion of the housing for imaging at least a portion of an inside of a wind turbine blade when the housing is inserted in and secured to a blade shell of the wind turbine blade.

An image acquisition system may herein generally be regarded as any suitable device or means for obtaining image data. Image acquisition system may in particular refer to a mechanical, digital, or electronic viewing device and the term herein encompasses a still camera; infrared camera; video camera; or any other instrument, equipment, or format capable of recording, and optionally storing or transmitting an image.

### BRIEF DESCRIPTION OF THE DRAWINGS

Figure 1 illustrates a perspective view of an example of a wind turbine;
Figure 2A illustrates a perspective view of an example of a wind turbine blade;
Figure 2B schematically illustrates an internal structure of a wind turbine blade;
Figure 3 schematically illustrates an enlarged cross-sectional view of a blade shell part with an inspection device arranged therein;
Figure 4 schematically illustrates a perspective view of an example of an inspection device;
Figure 5 schematically illustrates a perspective view of an inside of the inspection device of figure 4;
Figure 6 schematically illustrates an enlarged cross-sectional view of a blade shell part with an example of an inspection device arranged therein;
Figure 7 schematically illustrates an enlarged cross-sectional view of a blade shell part with another example of an inspection device arranged therein;
Figure 8 schematically shows a flow chart of an example of a method for mounting an inspection device in a wind turbine blade; and
Figure 9 schematically shows a flow chart of an example of a method for inspecting an inside of a wind turbine blade.

### DETAILED DESCRIPTION OF EXAMPLES

Reference now will be made in detail to embodiments of the present disclosure, one or more examples of which are illustrated in the drawings. Each example is provided by way of explanation only, not as a limitation. In fact, it will be apparent to those skilled in the art that various modifications and variations can be made in the present disclosure. For instance, features illustrated or described as part of one embodiment can be used with another embodiment to yield a still further embodiment. Thus, it is intended that the present disclosure covers such modifications and variations as come within the scope of the appended claims and their equivalents.

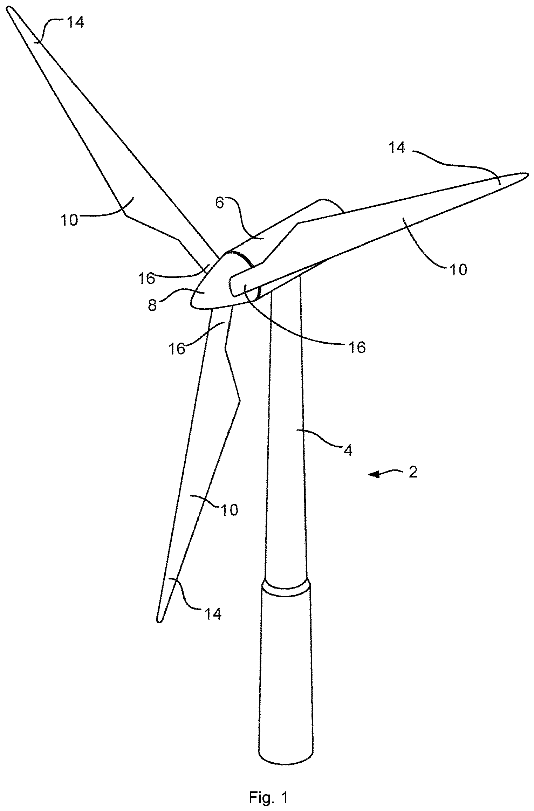

Fig. 1 illustrates a conventional modern upwind wind turbine 2 according to the so-called "Danish concept" with a tower 4, a nacelle 6 and a rotor with a substantially horizontal rotor shaft. The rotor includes a hub 8 and three blades 10 extending radially from the hub 8, each having a blade root 16 nearest the hub and a blade tip 14 furthest from the hub 8.

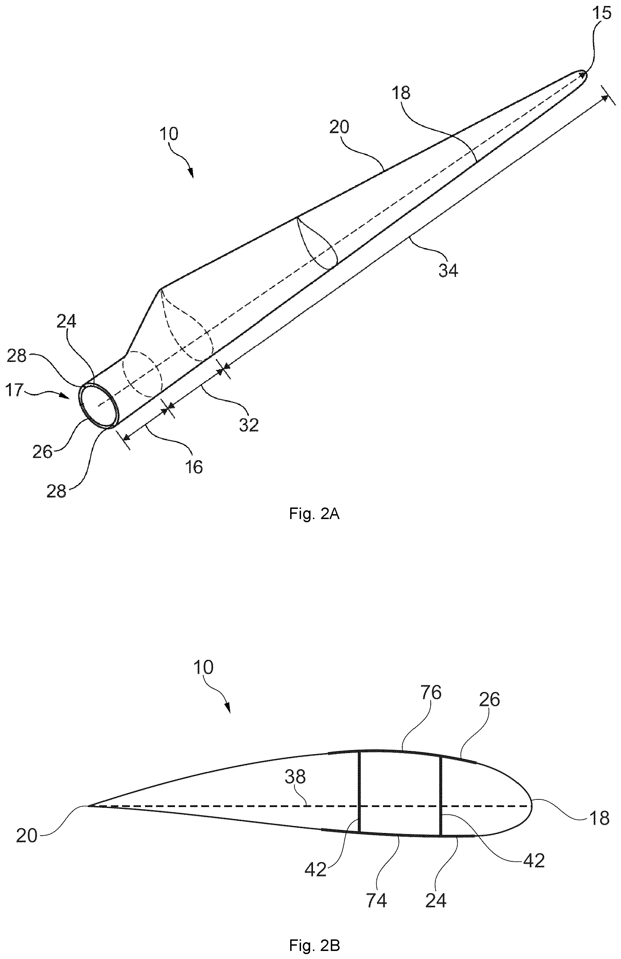

Fig. 2A shows a schematic view of an exemplary wind turbine blade 10. The wind turbine blade 10 has the shape of a conventional wind turbine blade with a root end 17 and a tip end 15 and comprises a root region 16 closest to the hub, a profiled or an airfoil region 34 furthest away from the hub and a transition region 32 between the root region 16 and the airfoil region 34. The blade 10 comprises a leading edge 18 facing the direction of rotation of the blade 10, when the blade is mounted on the hub, and a trailing edge 20 facing the opposite direction of the leading edge 18.

The airfoil region 34, also called the profiled region, has an ideal or almost ideal blade shape with respect to generating lift, whereas the root region 16, due to structural considerations, has a substantially circular or elliptical cross-section, which for instance makes it easier and safer to mount the blade 10 to the hub. The diameter (or the chord) of the root region 16 may be constant along the entire root area 16. The transition region 32 has a transitional profile gradually changing from the circular or elliptical shape of the root region 16 to the airfoil profile of the airfoil region 34. The chord length of the transition region 32 typically increases with increasing distance from the hub. The airfoil region 34 has an airfoil profile with a chord extending between the leading edge 18 and the trailing edge 20 of the blade 10. The width of the chord decreases with increasing distance from the hub.

A shoulder of the blade 10 is defined as the position, where the blade 10 has its largest chord length. The shoulder is typically provided at the boundary between the transition region 32 and the airfoil region 34.

It should be noted that the chords of different sections of the blade normally do not lie in a common plane, since the blade may be twisted and/or curved (i.e. pre-bent), thus providing the chord plane with a correspondingly twisted and/or curved course, this being most often the case in order to compensate for the local velocity of the blade being dependent on the radius from the hub.

The wind turbine blade 10 may comprise a blade shell comprising two blade shell parts or half shells, a first blade shell part 24 and a second blade shell part 26, typically comprising fiber-reinforced polymer, e.g. glass fiber composite. The wind turbine blade 10 may comprise additional shell parts, such as a third shell part and/or a fourth shell part. The first blade shell part 24 is typically a pressure side or upwind blade shell part. The second blade shell part 26 is typically a suction side or downwind blade shell part. The first blade shell part 24 and the second blade shell part 26 are fastened together with adhesive, such as glue, along bond lines or glue joints 28 extending along the trailing edge 20 and the leading edge 18 of the blade 10. Typically, the root ends of the blade shell parts 24, 26 have a semi-circular outer cross-sectional shape.

Figure 2B is a schematic diagram illustrating a cross sectional view of an example of a wind turbine blade 10, e.g. of the airfoil region 34 of the wind turbine blade 10. The wind turbine blade 10 comprises a leading edge 18, a trailing edge 20, a pressure side 24, a suction side 26, a first spar cap 74, and a second spar cap 76. The wind turbine blade 10 comprises a chord line 38 between the leading edge 18 and the trailing edge 20. The wind turbine blade 10 comprises shear webs 42, such as a leading edge shear web and a trailing edge shear web. The shear webs 42 could for example be a spar box with spar sides, such as a trailing edge spar side and a leading edge spar side in other examples. The spar caps 74, 76 may comprise for example carbon fibers and/or glass fibers, while the rest of the shell parts 24, 26 may generally comprise glass fibers. The spar caps 74, 76 may be part of, i.e. may be integrally formed with, the respective blade shell parts, or they may be adhered to the respective blade shell parts. Furthermore, each shell part 24, 26 may comprise one or more additional spar caps.

In an aspect of the present disclosure, a wind turbine blade is provided. The wind turbine blade comprises a blade shell and an inspection device. The blade shell comprises a hole and an internal wall surrounding the hole. The inspection device comprises a housing arranged at least in the hole of the blade shell and secured to the blade shell. The inspection device further comprises an image acquisition system arranged at a longitudinal end portion of the housing having a field of view of at least a portion of an inside of the wind turbine blade.

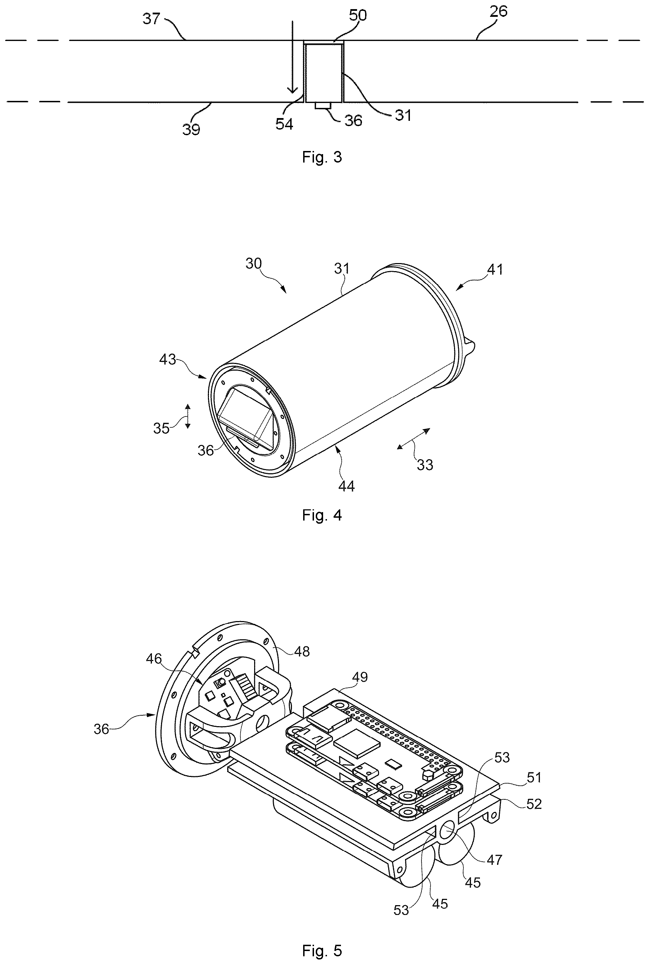

Figure 3 schematically illustrates an enlarged cross-sectional view of a blade shell part, in particular a downwind blade shell part 26, with an inspection device arranged therein. For example, the inspection device may be an inspection device 30 as illustrated in figure 4. The blade shell part may also be an upwind blade shell part 24 in other examples. The blade shell part 26 comprises an outer surface 37, an inner surface 39 and an internal wall 54 extending between both surfaces 37, 39. When bonded to the other blade shell part 24, the inner surface 39 may delimit an inner cavity of the blade 10, e.g. comprising structural beams, and the outer surface 37 may face an outside of the wind turbine blade 10. The inspection device 30 is arranged in the blade shell part such that the image acquisition system 36 faces an inside of the wind turbine blade 10 and may take images (and/or videos) of an inside of the blade 10, e.g. of an inner surface of the blade shell or elements inside the blade shell.

The wind turbine blade 10 may comprise one or more devices 30 in an upwind blade shell part 24 and/or one or more devices 30 in a downwind blade shell part 26 of the wind turbine blade. The inspection device 30 may fill the majority of the hole of the shell, see e.g. figure 3. In some examples, an outer longitudinal end of the housing 31 may be flush with the outer surface 37 of the corresponding blade shell part. In further examples, the housing 31 may slightly protrude beyond the outer surface 37. In other examples, the inspection device may be covered for closing the hole. For example, one or more layers 50, e.g. composite layers including fiber and resin, may cover the outer longitudinal end portion 41 of the housing 31 and fill the hole. The fiber may be glass fiber in some examples. The aerodynamic surface 37 of the blade shell part may therefore be maintained, see figure 3. The inspection device 30 may be protected from the ambient surrounding the wind turbine blade 10 and from weather conditions, for example from dust, humidity, bugs, and from rain, ice, and lightning.

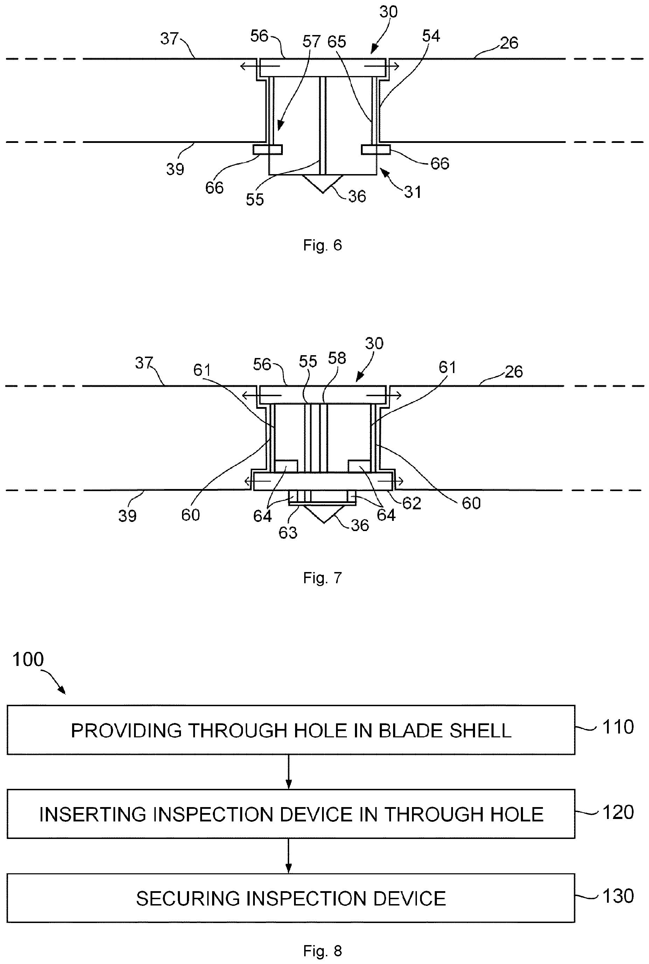

An inner longitudinal end of the housing 31 may in some examples be flush with the inner surface 39 of the corresponding blade shell part 26, see e.g. figure 3. The inner longitudinal end of the housing may in some examples protrude beyond the inner surface 39 of the blade shell part, see e.g. figure 6. In any of these examples, the image acquisition system 36 may protrude beyond the inner surface 39 of the blade shell part 26.

The inspection device 30, and specifically the housing 31, may therefore completely fill, or fill the majority of, the through hole of the blade shell. A lateral dimension, e.g. a radial dimension, of the housing of the inspection device, may be slightly smaller than a lateral dimension, e.g. a radial dimension, of the hole of the blade shell.

A perspective view of an example of an inspection device 30 is provided in figure 4. The inspection device 30 comprises a housing 31. In this example, the housing is tubular and extends in a longitudinal direction 33 and in a radial direction 35 perpendicular to the longitudinal direction 33. The housing 31 is configured to be inserted in a through hole extending between an outer surface and an inner surface of a blade shell 24, 26 of a wind turbine blade 10 and is configured to be attached to the blade shell 24, 26. The inspection device 30 further comprises an image acquisition system 36 arranged at, e.g. connected to, a longitudinal end portion 43 of the housing 31 for imaging at least a portion of an inside of the wind turbine blade when the housing 31 is inserted and secured to the blade shell 24, 26 of the wind turbine blade 10.

The inspection device 30 may be inserted from an outer side of the blade shell towards an inner side of the blade shell. In some examples, the housing 31 may be configured to this end. For example, the housing 31 may comprise one or more gripping elements, triggers for triggering an attachment action, visual indicators (e.g. arrow symbols) and/or other for suitably positioning and inserting the device 30 in the through hole of the blade shell.

The vertical arrow in figure 3 represents a direction of insertion. I.e., a blade shell may comprise a through hole extending between the outer surface 37 and the inner surface 39, and the inspection device 30 may be inserted from the outer side until the image acquisition system 36 reaches a suitable position for taking images. In some examples, images of a bulkhead of the wind turbine blade and/or of one or more shear webs may be taken. The through hole may extend substantially perpendicular to a local portion of the blade shell, e.g. perpendicular to a local outer surface 37 (or inner surface 39) of the corresponding blade shell part.

Inserting the inspection device, e.g. the device of figures 4 and 5, from an outside of the blade shell may be faster and easier than, for example, going inside a blade 10 from a root portion and reaching a position suitable for imaging e.g. a top portion of the blade or inserting the device from the inside towards the outside of the blade. This may apply to the first time when the inspection device 30 is inserted as well as to further insertions e.g. after performing maintenance of the device 30.

The housing 31 may comprise an outer longitudinal end portion 41, an inner longitudinal end portion 43 and a central portion 44, see the example of figure 4. The inner longitudinal end portion 43 may comprise the image acquisition system 36 and may be configured to face an inside of the wind turbine blade 10. The outer longitudinal end portion 41 is opposite the inner longitudinal end portion 43 and in use is arranged closer to the outer surface 37 of the blade shell part 26 than to the inner surface 39 of the blade shell part 26. The central portion 44 extends between the longitudinal end portions 41, 43.

The housing 31 may be configured to be secured to the blade shell. The housing 31 may comprise one or more securing or attaching elements for this. In some examples, attachment may be mechanical. For example, the housing 31, e.g. the inner longitudinal end portion 43, may comprise one or more anchor elements securing the housing 31 to the blade shell. The anchor elements may be extendable and retractable, and may for example have a claw-like shape when extended.

A cross-section of an example of an inspection device 30 comprising anchor elements is schematically illustrated in figure 6. In the example of figure 6, the anchor elements 57 are toggle bolts. For example, the inspection device may comprise four toggle bolts 57. The toggle bolts 57 of figure 6 are in an extended position. The toggle bolts 57 may be connected to the housing 31. Each toggle bolt 57 may comprise a bolt 65 and spring-loaded wings 66. When the inspection device 30 is inserted in the through hole, the wings 66 are folded. Once the device 30 is at a desired position and the wings have room for opening, the wings 66 extend. Tightening the bolt 65 may cause the wings 66 to press against the inner surface 39.

An outer portion of the housing 31, e.g. a radial portion such as the central portion 44, may comprise a male connector connected to a corresponding female connector of the internal wall 54 of the blade shell for securing the inspection device 30 to the blade shell. If the housing 31 comprises a male connector, the male connector may be retractable. When the male connector of the housing 31 is facing the corresponding female connector of the internal wall of the shell, the male connector may be extended and the inspection device 30 may be connected and secured to the shell.

Attachment may additionally or alternatively be chemical. For example, an adhesive may be applied to an outer surface of the central portion 44 of the housing 31 which is to face an internal wall 54 of the shell. Still other alternatives may be used on its own or in combination with other ways of securing the inspection device 30 to the blade shell, e.g. to a blade shell part 26.

In some examples, at least a portion of the housing 31, e.g. the outer longitudinal end portion, may be configured as an expansion plug for securing the device 30 to the internal wall 54 of the blade shell. The housing 31 may comprise a trigger element and a seal. Acting on the trigger element may expand the seal. An outer longitudinal end portion 41 of the housing 31 may include the trigger element for laterally, e.g. radially, expanding the seal. The trigger element may for example be a handle or nut which may be twisted, tightened or turned for expanding the seal and radially closing a space or gap between the device 30 and the internal wall 54 of the shell. The seal may be arranged on an outer surface of the central portion 44 of the housing 31.

In the examples of figure 6 and figure 7, which schematically illustrates a cross-sectional view of another example of an inspection device, the outer longitudinal end portion of the housing 31 is configured as an expansion plug 56. The radial direction in which the seal of the expansion plug expands is shown with two arrows.

The outer portion of the housing configured to face the internal wall 54, e.g. an outer radial portion of the housing 31 such as the central portion 44, may comprise one or more protrusions and/or one or more recesses. Such protrusions and/or recesses may help to increase the strength of the connection or attachment between the inspection device 30 and the internal wall 54 of the shell. For example, if an adhesive between the device 30 and the internal wall 54 is used, the adhesive may flow around the protrusions and/or within the recesses, and the strength of the bonding may increase. Or if an expansion plug is used, the friction between the seal and the internal wall 54 may increase.

Friction between the central portion 44 of the housing 31 and the internal wall 54 may also increase with the presence of protrusions and/or recesses if other securing features are used. For example, insertion of the inspection device 30 may cause an increase of friction between the housing 31 and the internal wall 54 of the shell, and thus of attachment strength. In other words, the housing 31 of the inspection device 30 may comprise recesses and/or protrusion regardless the way of securing the device 30 to the shell.

In some examples, the housing of an inspection device may comprise an outer housing 60 and an inner housing 61. The outer housing may be a tube 60, see figure 7. The outer housing 60 may be adhered to the internal wall of the blade shell. For example, adhesive may be applied to the internal wall as well as to an outer surface of the outer housing which is to face the internal wall. The adhesive may bond the outer housing 60 to the internal wall. In some examples, an adhesive may harden between 10 and 15 minutes. A resin or adhesive that cures at ambient temperature may be used.

Once the outer housing has been attached to the internal wall of the blade shell, the inner housing 61 may be inserted in the outer housing 60. The inner housing, for example a central portion of the inner housing, may therefore be arranged within the outer housing.

The inner housing 61 may be attached, specifically removably attached, to the outer housing 60. For example, a bayonet coupling may be used to removably attach the inner housing 61, e.g. a central portion thereof, to the outer housing 60.

As schematically illustrated in the example of figure 7, an inspection device 30 may comprise an expanding rubber 62, for example in the form of an expansion plug, for securing the an inner longitudinal end portion of the inspection device. A bolt 58 may be provided for triggering the expansion of the rubber 62. The inner housing may therefore comprise two expansion plugs portions. I.e., the outer and inner longitudinal end portions of the inner housing may be configured as expansion plugs. This may be applicable to other examples. For example, the toggle anchors 57 of the inspection device 30 of figure 6 may be replaced by an expansion plug 56 for securing the inner longitudinal end portion of the device.

If expanding rubber 62 is used at the inner longitudinal end portion of the device 30, the housing, e.g. the inner housing 61, a support 63, 64 for the image acquisition system 36 may go through the expanding rubber 64. For example, the camera support may comprise arms or flanges 64 inside the housing which may go through and beyond the expanding rubber 62, see figure 7. A plate 63 may be attached to the portion of the flanges 64 protruding from the expanding rubber 62, and the acquisition system 36 may be attached to the plate 63.

Although the blade shell 26 is shown as chamfered in the examples of figures 6 and 7, the outer chamfer (figures 6 and 7) and/or the inner chamfer (figure 7) may be dispensed with in other examples. E.g., the inner chamfer of figure 7 may be avoided in other examples.

The housing 31 of an inspection device may have a circular cross-section. The housing 31 may therefore have a cylindrical shape or a truncated cone shape in some examples. These shapes of the housing 31 may facilitate the installation and removal of the inspection device 30. Also, a cylindrical through hole may be easy to provide, or at least easier to provide than through holes having other shapes. In some other examples, the housing 31 may for example have a prism shape, e.g. a rectangular prism or other suitable type of prism, or have a cube shape.

The housing 31 may in some examples be made of a plastic or composite material. The housing 31 may in other examples be made of metal, e.g. of aluminum, but the risk of attracting lightning may be increased if the housing includes metal. Metals with relatively low conductivity such as titanium might be used as well. In some examples, the housing may comprise more than one material, e.g. comprise composite and metal.

The image acquisition system 36 of an inspection device may comprise an optical camera and/or a thermal camera. An optical camera may provide an image from the light reflecting off the imaged object and may detect the region of the electromagnetic spectrum visible to the human eye and a portion of the near infrared region of the electromagnetic spectrum. A thermal camera may provide images based on the infrared radiation (thermal energy) emitted by the imaged object and they may detect the mid and far infrared regions of the electromagnetic spectrum. Obtaining images with both types of cameras may provide more complete information of an inside of the wind turbine blade.

An inspection device may comprise an actuator, e.g. a rod, for rotating the image acquisition system and changing a field of view of the image acquisition system. Figure 5 schematically illustrates a perspective view of an inside of the inspection device 30 of figure 4. The inspection device 30 of this example comprises a rod for rotating the image acquisition system 36 around the longitudinal direction 33 of the housing 31. The rod may extend along the longitudinal direction 33 of the housing 31 and may be connected to the image acquisition system 36. For example, the inspection device 30 may comprise a support 48 for the image acquisition system 36, and the image acquisition system 36 may be arranged in the support 48. The image acquisition system support 48 may e.g. be positioned inside the housing 31 at an inner longitudinal end portion 43 of the housing 31. The rod may be rotatably coupled to the image acquisition system support 48.

When the inspection device 30 is inserted into a through hole of a blade shell, the rod may be rotated, e.g. manually, for rotating the support 48 and thereby point the image acquisition system 36 to a desired region inside the wind turbine blade 10. Once the image acquisition(s) point to a desired location, the rod may be locked and the housing 31 may be closed. For example, a lid may be added to close the outer longitudinal end portion 41 of the housing 31.

The examples of figures 6 and 7 show a rod 55 for orienting the image acquisition system 36. In the example of figure 7, the rod 55 extends through the expansion rubber 62. A gear system (e.g. epicyclic gearing, a pinion with annular gear or other) may be provided at the end of the rod 55 for rotating the image acquisition system 36. A hex key may be used to drive the rod 55 and change the orientation of the image acquisition system 36 in some examples.

The inspection device 30 may comprise a main frame 49 fixedly connected to the housing 31, see figure 5. The main frame 49 may comprise a through hole 47 for receiving and supporting the rod for positioning the image acquisition system 36. If the inspection device 30 includes the image acquisition system support 48 referred to above and the main frame 49, the rod may enable the image acquisition system support 48 to rotate with respect to the main frame 49.

The main frame 49 may additionally or alternatively be configured to receive and support one or more batteries 45. Although the example of figure 5 shows a main frame 49 with the through hole 47 for the positioning rod and the main frame 49 is configured to receive batteries 45, in other examples a main frame 49 may lack the through hole 47 and the battery supports. Still in other examples, a housing 31 of other examples of an inspection device 30 may lack a main frame 49, and the components inside the housing 31 may be arranged and connected in a different manner.

The main frame 49 may in some examples include a first plate 51 and a second plate 52. The second plate 52 may be parallel to the first plate 51. The plates 51, 52 may e.g. have a rectangular shape or a similar shape. Walls 53 connecting the first plate 51 and the second plate 52, together with the plates 51, 52, may form the through hole 47 for receiving the positioning rod. The first plate 51 and the second plate 52 may provide support for electric components inside the housing 31 and may also help to support the image acquisition system 36, e.g. the image acquisition system support 48.

The inspection device, for example the inspection device of figures 4 and 5, may comprise one or more batteries 45 inside the housing 31. The batteries 45 may power the image acquisition system 36 and other electric elements or systems of the device 30. The batteries may help the inspection device 30 to operate independently from other electric systems, to obtain pictures at desired times and to transmit the pictures or associated information to one or more external elements or systems. Cables for powering the inspection device 30 may be avoided. A faster and simpler installation of the inspection device 30 may therefore be achieved. If present, the first plate 51 and/or the second plate 52 may be configured to support one or more batteries 45.

The inspection device 30 may comprise one or more processors. The one or more processors may be configured to perform several tasks, for example to control the operation of the image acquisition system 36 and/or to process the captured images. The inspection device 30 may comprise one or more memories for storing data such as images captured by the image acquisition system 36.

The inspection device 30 may comprise a communications system for communicating with one or more external elements, e.g. a main control system of the wind turbine 2 and/or other control system(s) such as a control system arranged in the rotor hub 8. A system with which the inspection device 30 may communicate may be away from the corresponding wind turbine 2, e.g. at a substation. The inspection device 30 may therefore transmit, e.g. wirelessly transmit, data obtained by the image acquisition system 36. Any suitable wireless communications protocol known in the art may be used. A wireless connection may enable data transmission without the need for additional cables and additional time and effort for installing and connecting them between the appropriate systems/components. In general, any suitable inspection device may comprise a transmitter configured to transmit images.

Data transmission may be performed on request, at predetermined times and/or after the elapsed of a predetermined time period. In some examples, an inspection device may be preprogrammed to take images at predetermined moments. For example, the image acquisition system may be configured to be switched ON during a first period of time and to be switched OFF during a second period of time. For example, the first period of time may be of 5 minutes and the second period of time may be of 55 minutes.

The inspection device 30 may comprise one or more printed circuit boards (PCBs) 46 for supporting the electronic components of the inspection device.

The explanations with respect to figure 5 may be applicable to the inspection device of figures 6 and 7. For example, an inside of the inspection devices of these examples may likewise comprise a main frame, a communication system, one or more PCBs, batteries, etc.

An inspection device 30, e.g. any of the devices of figures 3 - 7, may further comprise a self-harvesting unit, for example a rotational energy harvester. The self-harvesting unit may be configured to convert mechanical energy generated by the rotational motion of the wind turbine rotor into electrical energy. Such energy may be used to power at least in part the inspection device 30 and/or to recharge its batteries.

According to a further aspect of the disclosure, a wind turbine 2 is provided. The wind turbine comprises a wind turbine blade 10 according to the previous aspect. All the wind turbine blades 10 of the wind turbine 2 may comprise at least one inspection device. The inspection device may for example be according to the example of figures 4 and 5. The inspection device may comprise some or all the features described with respect to the device of the example of figures 4 and 5.

Sill in a further aspect of the disclosure, a method 100 for mounting an inspection device comprising a housing and an image acquisition system arranged at a longitudinal end portion of the housing in a wind turbine blade comprising a shell is provided. An example of method 100 is illustrated in the flow chart of figure 8. The method comprises, at block 110, providing a through hole in the shell of the wind turbine blade 10, and at block 120, inserting the inspection device 30 in the through hole such that a field of view of the image acquisition system 36 comprises at least a portion of an inside of the wind turbine blade 10, e.g. such that the image acquisition system is closer to an inner surface 39 than to an outer surface 37 of the corresponding blade shell part. The method further comprises, at block 130, securing the inspection device 30 to the blade shell.

The details and explanations of the wind turbine blade 10, the inspection device 30 and the wind turbine 2 described in the previous aspects may be applied to this method, and *vice versa.*

The inspection device 30 may therefore be easily and quickly arranged in and attached to the blade shell. The above steps may be the steps of an installation method, i.e. if the inspection device 30 is positioned in the through hole for the first time. At least the steps of inserting 120 and securing 130 may also be the steps of a maintenance or repair method, i.e. if the inspection device 30 is removed from the shell, then repair or maintenance actions may be performed on the device 30, and then the device 30 may be arranged again in the through hole. For example, the device 30, e.g. the entire device or the inner housing, may be removed from the through hole for replacing one or more batteries 45. Batteries may be replaced between e.g. 6 and 12 months. The outer surface of the shell may be removed, e.g. grinded, for accessing the inspection device. A cover 50 may be removed in the examples where such cover is present, see figure 3.

Providing the through hole may comprise drilling. Drilling the blade shell may be a particularly efficient way of providing a through hole in the blade shell. The obtained through hole may have a cylindrical shape. Drilling, and in general providing the through hole, may be performed from the outer surface 37 of the corresponding blade shell part to the inner surface 39 of the blade shell part. In other words, the inspection device 30 may be inserted from a side of the blade shell configured to face an outside of the wind turbine blade 10.

A through hole may be provided in other suitable manners. For example, techniques such as electrical discharge machining (EMD), waterjet cutting or laser cutting may be used in other examples.

In general, the wind turbine blade 10 may be first manufactured and then one or more through holes may be provided in the blade shell, e.g. in the upwind blade shell part 24 and/or in the downwind blade shell part 26. The position of the through holes and the inclination they may have with respect to a local surface, e.g. with respect to an inner surface 39 of a blade shell part, may be controlled in an easier and precise manner.

The holes may be provided from the outside of the blade 10, i.e. the hole may start to be provided from the outer surface 37 and advance towards and reach the inner surface 39 of the blade shell. For example, the two blade shell parts 24, 26 may be first manufactured and bonded to each other, and then one or more through holes may be drilled from the outside of the blade at suitable longitudinal and chordwise positions in at least one of the blade shell parts. These operations may be performed before transporting the wind turbine blade to the site in which the wind turbine(s) will be erected, e.g. in a plant in which wind turbine blades 10 are manufactured.

Still in other examples, one or more through holes may be provided to blades 10 which are already connected to a wind turbine tower. For example, operators may travel to a wind farm, reach a wind turbine blade, provide a through hole in the blade shell and insert the inspection device 30 in the through hole. Like before, the through hole may be drilled. The inspection device 30 may also be inserted from the outside of the blade 10. Existing wind turbine blades may therefore be provided with inspection device(s) 30 as described herein.

Once the inspection device 30 has been inserted in a through hole of the blade shell, it may be secured to the blade shell. Securing 130 may be performed in several manners. At least some of them have been mentioned and explained before. For example, securing 130 may comprise at least a portion of an outer surface of the housing 31 exerting a pressure to an internal wall 54 of the blade shell surrounding the through hole. A friction fit may be achieved in this manner. For example, an outer portion of the housing may be configured as an expansion plug. Securing 130 may additionally or alternatively comprise bonding at least a portion of an outer surface of the housing 31 to an internal wall of the blade shell surrounding the through hole.

The method may further comprise covering the inserted and secured inspection device 30 for closing the through hole. For example, one or more layers 50 may be arranged above the inserted and secured inspection device 30. The cover 50 may form an outer local portion of the blade shell. In some examples, an epoxy resin may be used. Epoxy resins may have good adhesive properties. Composite patches, e.g. fiberglass patches, may also be used. These patches may be made of layers of fiberglass fabric impregnated with epoxy resin. Layers comprising polyurethane, silicone or other suitable materials, e.g. made of polyurethane or silicone, may also be applied to close the space between the outer longitudinal end of the inspection device 30 and the outer surface 37 of the blade shell. The application of a cover, e.g. layers 50, for sealing the outer region of the through hole may help to maintain the structural integrity of the blade shell parts and to protect the inspection device 30.

If the inspection device 30 includes a rod 55 for rotating the image acquisition system 36, the method may further comprise rotating the rod for causing the image acquisition system 36 to point in a desired direction. The inspection device 30 may be closed, e.g. with a lid, after orienting the image acquisition system 36. In other examples, the outer longitudinal end portion 41 of the device 30 may comprise an element for rotating the rod from the outside of the housing 31. In this manner, the device 30 may be first secured to the blade shell part, and the image acquisition system 36 may then be oriented as desired.

For example, when installing an inspection device 30 like the one of figure 6, the device 30 may be first inserted in the through hole, the wings of the toggle bolts 57 may be opened, the image acquisition system 36 may be oriented and then the seal of the expansion plug 56 may be expanded. Or when installing an inspection device 30 like the one of figure 7, the outer housing 60 may be first inserted in the through hole of the blade shell and bonded to the internal wall of the blade shell, and then the inner housing 61 may be inserted in the outer housing and locked, specifically removably locked, to the outer housing 60. The image acquisition system 36 may be oriented with the rod 55, the rubber 62 may be radially expanded and then the seal of the expansion plug 56 may be radially expanded.

A hole provided in a blade shell may be closed after removing the inspection device 30, or at least a portion thereof, in the hole. For example, the entire device, see figure 6, or an inner housing, see figure 7, may be removed. The hole may then be filled for recovering the structural integrity and aerodynamic performance of the blade. Resin, optionally including fibers, may be used. In some examples, a body having dimensions similar to the dimensions of the hole may be inserted in the hole for closing the hole. The body may for example be a cylinder. The body may help to transfer loads as if the hole had not been provided in the blade shell in the first place.

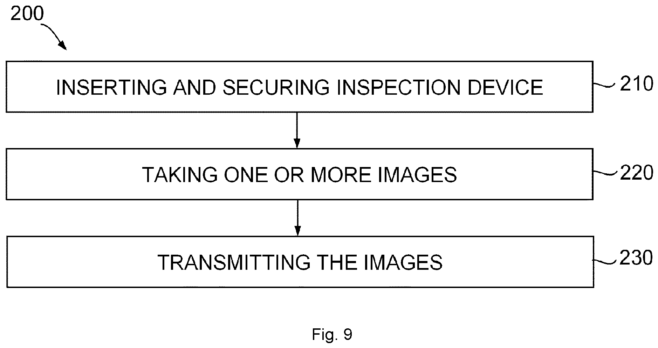

Still in a further aspect, a method 200 for inspecting an inside of a wind turbine blade 10 is provided. An example of method 200 is illustrated in the flow chart of figure 9. The method comprises, at block 210, inserting an inspection device 30 comprising a housing 31 and an image acquisition system 36 arranged at a longitudinal end portion 43 of the housing within a through hole of a shell of the wind turbine blade 10 and securing the inspection device 30 to the wind turbine blade 10 such that the image acquisition system 36 can image at least a portion of an inside of the wind turbine blade 10. The method further comprises, at block 220, taking one or more images with the image acquisition system 36. The method further comprises, at block 230, transmitting the one or more images. The inspection device 30 may for example be the inspection device 30 of figures 4 and 5 or the inspection device 30 of figures 6 or 7. The inspection device 30 may comprise some or all the features of the device of the examples of figures 4 and 5, figure 6 or figure 7.

The inspection device 30 may be inserted from an outside of the wind turbine blade 10. For example, an operator may insert the device 30 in the through hole until the image acquisition system reached a desired position and the image acquisition system may suitably image at least a portion of the inside of the wind turbine blade 10.

The method may further comprise rotating the image acquisition system to point in a specific direction. For example, a rod 55 inside the housing 31 may be rotated for rotating one or more of the camera(s) of the image acquisition system. The view angle of a camera or a suitable imaging device may be chosen depending on whether a larger or smaller region of the inside of the blade is to be monitored, and depending on whether the inspection device 30 includes or not a rotatable camera. A view angle of a camera may be of 120 ° in some examples.

The method may further comprise providing the through hole, and specifically from an outside of the wind turbine blade 10. An operator may therefore provide the through hole in the wind turbine blade 10, and the same or a different operator may then insert the device 30 into the through hole from the outside of the blade. In some examples, the through hole may be drilled. The wind turbine blade 10 may be part of a wind turbine 2 in some examples.

The method may further comprise closing a gap between the inspection device 30 and an outer surface 37 of the blade shell. One or more layers of suitable material may be added, e.g. on top of the inspection device 30. For example, fiberglass patch may be used.

The inspection device 30 may be secured to the wind turbine blade in different manners. For example, the device 30 may include one or more anchor elements, or a portion of the device 30 may be configured as an expansion plug, e.g. a shaw plug. In these or other examples, the device 30 may be bonded to the blade 10.

The details and explanations of the previous aspects may be applied to this aspect, and *vice versa.*

This written description uses examples to disclose a teaching, including the preferred embodiments, and also to enable any person skilled in the art to put the teaching into practice, including making and using any devices or systems and performing any incorporated methods. The patentable scope is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims. Aspects from the various embodiments described, as well as other known equivalents for each such aspects, can be mixed and matched by one of ordinary skill in the art to construct additional embodiments and techniques in accordance with principles of this application. If reference signs related to drawings are placed in parentheses in a claim, they are solely for attempting to increase the intelligibility of the claim, and shall not be construed as limiting the scope of the claim.

## Claims

1. A wind turbine blade (10) comprising:
a blade shell (24, 26) and an inspection device (30);
wherein the blade shell (24, 26) comprises a hole and an internal wall (54) surrounding the hole, and the inspection device (30) comprising:
a housing (31) arranged at least partially in the hole of the blade shell (24, 26) and secured to the blade shell (24, 26); and
an image acquisition system (36) arranged at a longitudinal end portion (43) of the housing (31) having a field of view of at least a portion of an inside of the wind turbine blade (10).

2. The blade of claim 1, wherein at least a portion of the housing (31) is configured as an expansion plug (56) for securing the inspection device (30) to the internal wall (54) of the blade shell (24, 26).

3. The blade of claim 1 or claim 2, wherein the housing (31) comprises one or more anchor elements (57) securing the housing (31) to the blade shell (24, 26).

4. The blade of any of claims 1-3, wherein the housing (31) comprises an outer housing (60) attached to the internal wall (54) and an inner housing (61) within the outer housing (60), the image acquisition system (36) being arranged with the inner housing (61).

5. The blade of any of claims 1 - 4, wherein the housing (31) has a circular cross-section.

6. The blade of any of claims 1-5, wherein the housing (31) is tubular.

7. The blade of any of claims 1-6, wherein the image acquisition system (36) comprises an optical camera and/or a thermal camera.

8. The blade of any of claims 1-7, wherein the inspection device (30) further comprises one or more batteries (45) inside the housing (31).

9. The blade of any of claims 1-8, wherein the inspection device (30) further comprises an actuator (55) for rotating the image acquisition system (36) and changing a field of view of the image acquisition system (36).

10. The blade of any of claims 1-9, wherein the inspection device (30) further comprises a transmitter configured to transmit images.

11. The blade of any of claims 1 -10, wherein the inspection device (30) is preprogrammed to take images at predetermined moments.

12. A method (100) for mounting an inspection device (30) comprising a housing (31) and an image acquisition system (36) arranged at a longitudinal end portion (43) of the housing (31) in a wind turbine blade (10) comprising a shell (24, 26), the method (100) comprising:
providing (110) a through hole in the shell (24, 26) of the wind turbine blade (10);
inserting (120) the inspection device (30) in the through hole such that a field of view of the image acquisition system (36) comprises at least a portion of an inside of the wind turbine blade (10); and
securing (130) the inspection device (30) to the blade shell (24, 26).

13. The method of claim 12, wherein securing (130) comprises bonding at least a portion of an outer surface of the housing (31) to an internal wall (54) of the blade shell (24, 26) surrounding the through hole.

14. The method of claim 12 or claim 13, wherein securing (130) comprises at least a portion of an outer surface of the housing (31) exerting a pressure to an internal wall (54) of the blade shell (24, 26) surrounding the through hole.

15. The method of any of claims 12 - 15, further comprising covering the inserted and secured inspection device (30) for closing the through hole.
